# EUROPÄISCHE PATENTSCHRIFT

(11) **EP 1 886 044 B1**
(45) Veröffentlichungstag und Bekanntmachung des Hinweises auf die Patenterteilung: **15.10.2008**
(21) Anmeldenummer: 06724758.5
(22) Anmeldetag: 09.05.2006
(51) Int. Cl.: F16D 65/60

(54) **GESTÄNGESTELLER FÜR TROMMELBREMSE**
LINKAGE POSITIONER FOR A DRUM BRAKE
REGLEUR DE TIMONERIE DESTINE A UN FREIN A TAMBOUR

(30) Priorität: 20.05.2005 DE 102005023409; 31.08.2005 DE 102005041342
(43) Veröffentlichungstag der Anmeldung: 13.02.2008
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2006/004303
(87) Internationale Veröffentlichungsnummer: WO 2006/122671

(56) Entgegenhaltungen:
- GB-A- 326 483
- US-A- 4 875 557
- US-A1- 2005 034 935
- US-B1- 6 651 784

## Beschreibung

Die Erfindung betrifft einen Gestängesteller für eine Trommelbremse zum Nachstellen des bremsbedingten Verschleißes insbesondere an den Bremsbelägen, mit einer Überlastkupplung und einer Einwegdreh- bzw. Richtungskupplung.

In schweren Nutzfahrzeugen werden häufig pneumatisch betätigte Trommelbremsen als Reibungsbremsen verwendet. Eine bevorzugte Bauart ist die so genannten S-Nocken-Trommelbremse.

Zur Erzeugung einer Bremskraft müssen Bremsbacken, welche Bremsbeläge bilden oder tragen, in radialer Richtung von innen an die Trommel der Trommelbremse gedrückt werden. Bei der S-Nocken-Trommelbremse geschieht dies durch Verdrehen einer Bremswelle, welche an einem Ende eine Doppelevolvente in S-Form aufweist. An dieser Nocke stützen sich die beiden Bremsbacken mit ihren Enden ab, wobei die diesen Enden gegenüberliegenden Enden jeweils beispielsweise um einen Bolzen schwenkbar an einem Bremsträger befestigt sind. Für den Bremsvorgang muss die Bremswelle mit der S-Nocke solange verdreht werden, bis die Bremsbacken mit der gewünschten Kraft an der Trommel zur Anlage kommen. Die Verdrehung der Bremswelle geschieht mit Hilfe eines druckluftbetätigten Bremszylinders, der über einen Hebel ein Drehmoment erzeugt und auf die Bremswelle überträgt.

Da sich die Bremsbacken bzw. die Bremsbeläge beim Bremsen abnützen, ist es notwendig, diesen Bremsbelagverschleiß durch eine Justiervorrichtung auszugleichen. Zu diesem Zweck muss die Bremswelle mit der S-Nocke um einen entsprechenden Betrag in der Richtung verdreht werden, in welcher die Bremsbeläge zur Trommel hin beim Bremsvorgang verstellt werden, damit die Bremsbacken näher an die Innenseite der Trommel gerückt werden. Diese Richtung wird als Zuspannrichtung bezeichnet. Jedoch muss in der Ruhelage ein geringer Spalt zur Gewährleistung eines einwandfreien Löseverhaltens verbleiben. Diese Nachjustierung kann man in regelmäßigen Abständen auch manuell durchführen. Hierzu muss am Bremshebel der Bremswelle, an welchem der Bremszylinder mit seiner Kolbenstange angreift, eine Nachjustierung vorgenommen werden. Da die manuelle Nachstellung weder bedarfsgerecht noch kontinuierlich arbeitet, gehören so genannte automatische Gestängesteller zur Standardausrüstung von Fahrzeugen mit S-Nocken-Trommelbremsen.

Es gibt verschiedene Systeme von Gestängestellern. Der Grundaufbau ist sehr ähnlich und besteht im Wesentlichen aus einem Schneckenrad, einer Schnecke, einer Überlast- bzw. Lastschaltkupplung, einer Einwegkupplung (meistens nach dem Schlingfederprinzip), einem Zahnrad, einer Zahnstange und einer so genannten Steuerscheibe. Diese Mechanik befindet sich in einem Gehäuse, welches einen Hebel aufweist, an dem der Bremszylinder angelenkt ist. Die Bremswelle ist mittels Keilverzahnung mit dem Schneckenrad gekoppelt.

Bei den Gestängestellern gibt es zwei Funktionsprinzipien: Bei einem Nachstellprinzip erfolgt die Nachstellung am Anfang des Bremsvorgangs, bei dem anderen Prinzip wird am Ende, das heißt beim Lösevorgang nachgestellt.

Als ein Beispiel zur Illustration sei hier EP 0 614 025 B1 genannt. In diesem Dokument ist eine Nachstellvorrichtung für eine Scheibenbremse beschrieben, wobei eine Anwendung der beiden oben genannten Funktionsprinzipien zusammen erfolgt, indem am Anfang des Bremsvorgangs nachgestellt und ein elastisches Element gespannt wird, welches sich beim Lösevorgang entspannt und eine weitere Nachstellung bewirkt.

Auch US-A-4 875 557 zeigt ein Gestängesteller für eine Trommelbremse. Die derzeit auf dem Markt befindlichen Gestängesteller erfüllen bzgl. Dauerhaltbarkeit und Dauerfunktionsverhalten nicht immer die Erwartungen bzw. Anforderungen. Als ein für Verschleiß anfälliges Bauteil hat sich die Einwegkupplung in Form der Schlingfeder erwiesen. Die Funktion dieses Bauteils hängt stark von den Reibungsverhältnissen, von der Formgebung und der Formstabilität der Gegenflächen ab. Kommt es im Laufe der Zeit zu Verschleiß und/oder Änderungen der Reibverhältnisse, kann es zum Funktionsausfall des Bauteils und somit des gesamten Gestängestellers kommen.

Die Aufgabe der vorliegenden Erfindung besteht darin, einen Gestängesteller der oben genannten Art mit einer Mechanik zu schaffen, die eine hohe Robustheit aufweist und bzgl. Funktionsverhalten möglichst wenig von Reibwertschwankungen und Fertigungstoleranzen beeinflusst wird. Eine weitere Zielsetzung besteht in einer möglichst kostengünstigen Herstellung.

Diese Aufgabe wird erfindungsgemäß durch einen Gestängesteller mit den Merkmalen des Anspruchs 1 sowie durch eine Trommelbremse mit den Merkmalen des Anspruchs 10 gelöst.

Ein erfindungsgemäßer Gestängesteller für eine Trommelbremse zum Nachstellen des bremsbedingten Verschleißes insbesondere an den Bremsbelägen, mit einer Überlastkupplung und einer Einwegdreh- bzw. Richtungskupplung, ist dadurch gekennzeichnet, dass die Überlastkupplung als Kugelrampenkupplung ausgebildet ist, die durch eine Druckfeder vorgespannt ist.

In einer bevorzugten Ausgestaltung ist die Richtungskupplung als Klemmrollenfreilauf ausgebildet. Dabei ergibt sich ein Exaktes Funktionsverhalten auf Grund der Verwendung von präzisen und reibungsunabhängigen Bauteilen.

Eine weitere Ausgestaltung sieht vor, dass die Kugelrampenkupplung aus gegenüber liegend angeordneten Stirnflächen besteht, die jeweils mit Kugeltaschen für dazwischen angeordnete Kugeln ausgebildet sind. Hierbei ist es besonders vorteilhaft, dass alle bewegten Bauteile der Nachstellermechanik kugelgelagert ausgebildet sind, da so ein hoher Wirkungsgrad ermöglicht wird.

In einer anderen Ausführungsform ist vorgesehen, dass die Überlastkupplung und die Richtungskupplung zusammen eine Kugelsperrkupplung bilden. Dabei ist es bevorzugt, dass die Kugelsperrkupplung aus zwei gegenüberliegend angeordneten Rampenkonturen mit dazwischen angeordneten Kugeln besteht, wobei in besonders bevorzugter Ausgestaltung die Rampenkonturen mindestens zwei unterschiedliche Steigungen aufweisen. Das ist vorteilhaft, da sich ein exaktes Funktionsverhalten ergibt. Denn die Freilauffunktion und die Überlastfunktion sind nur durch die Formgebung und die Vorspannkraft definiert, und somit haben Reibungen keinen Einfluss auf das Funktionsverhalten.

In einer alternativen Ausführung weisen die Rampenkonturen eine kurvenförmige Ausbildung auf.

Es ist vorteilhaft, dass die Kugelsperrkupplung eine Kegelkupplung aufweist, da in dieser bevorzugten Ausgestaltung eine günstig Herstellung der Bauteile möglich ist, denn die wesentlichen Bauteile der Nachstellermechanik sind durch spanlose Umformprozesse zu fertigen.

Weiterhin ist vorgesehen, dass die Rampenkonturen und die dazwischen angeordneten Kugeln durch eine Drehfeder aneinander gehalten werden.

Eine erfindungsgemäße Trommelbremse weist den erfindungsgemäßen Gestängesteller auf.

Weitere Vorteile, Einzelheiten und Merkmale der Erfindung sind der folgenden detaillierten Beschreibung im Zusammenhang mit den beigefügten Zeichnungen zu entnehmen.

Die Erfindung wird nun anhand des in den Figuren der Zeichnung dargestellten Ausführungsbeispiels näher erläutert. Hierbei zeigt:
- Fig. 1: eine Schnittdarstellung einer beispielhaften ersten Ausführungsform eines erfindungsgemäßen Gestängestellers;
- Fig. 2: eine erweiterte Schnittdarstellung des Gestängestellers nach Fig. 1;
- Fig. 3: eine Schnittdarstellung längs der Linie I-I des Gestängestellers nach Fig. 1;
- Fig. 4: eine schematische Darstellung einer Steuerscheibe mit Zahnstange des Gestängestellers nach Fig. 1; und
- Fig. 5: eine Schnittdarstellung einer beispielhaften zweiten Ausführungsform des erfindungsgemäßen Gestängestellers.

Gleiche Bezugszeichen in den einzelnen Figuren bezeichnen gleiche bzw. funktionell einander entsprechende Teile.

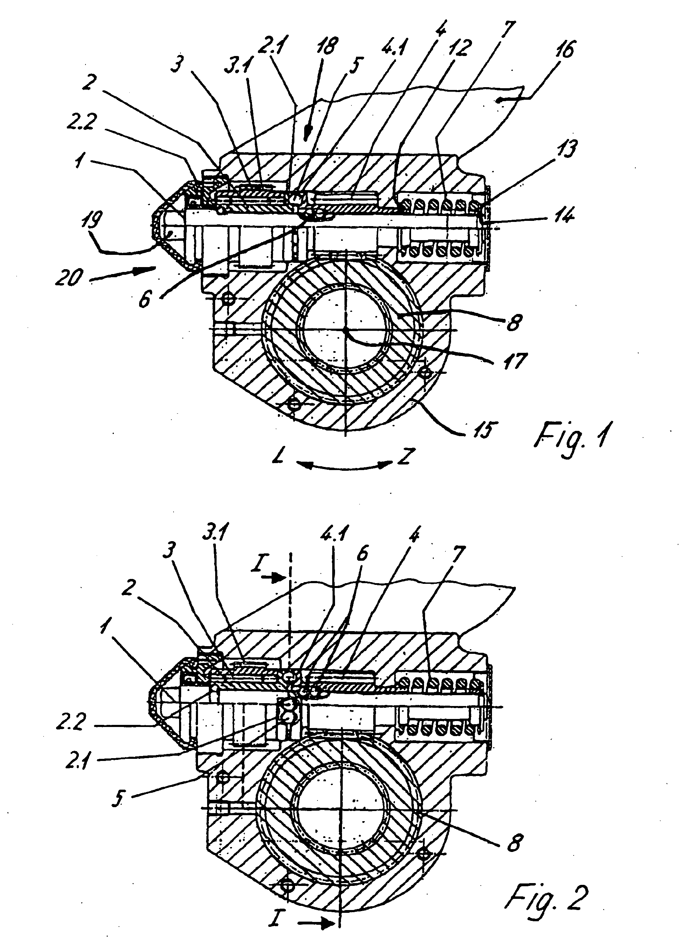

Fig. 1 zeigt eine Schnittdarstellung einer beispielhaften ersten Ausführungsform eines erfindungsgemäßen Gestängestellers 20.

Die Nachstellermechanik dieser ersten Ausführungsform besteht aus folgenden Einzelkomponenten: einer Welle 1; einer Klemmhülse 2 mit stirnseitig angeordneten ersten Kugeltaschen 2.1 auf der einen Seite und mit einem Axiallager 2.2 auf der anderen Seite, welche einem ersten Ende der Welle 1 benachbart ist; einem Klemmrollenfreilauf 3 mit einer Außenverzahnung 3.1; einer Schnecke 4 mit stirnseitig angeordneten zweiten Kugeltaschen 4.1, welche den ersten Kugeltaschen 2.1 gegenüberliegend angeordnet sind; aus mehreren Kugeln 5 für eine so genannte Kugelrampenkupplung 18; mehreren Sperrkugeln 6 zur Übertragung eines Drehmoments zwischen der Welle 1 und der Schnecke 4; einer Vorspannfeder 7 mit Stützscheiben 12, 13 und einem Sicherungsring 14; einem Schneckenrad 8; einer Zahnstange 9; einer Steuerscheibe 10 und einem Fixierhebel 11.

Der Gestängesteller 20 ist in einem Gehäuse 15 angeordnet, wobei eine Achse 17 des Schneckenrads senkrecht auf der Zeichnungsebene steht und die Längsachse der Welle 1 des Gestängestellers rechtwinklig zu der Achse 17 verläuft. In diesem Beispiel ist oberhalb der Welle 1 am Gehäuse 15 ein Hebel 16 angeordnet, welcher in Wirkverbindung mit einem nicht dargestellten Bremszylinder steht.

Innerhalb des Schneckenrads 8 befindet sich eine ebenfalls nicht dargestellte Bremswelle, die an ihrem hier nicht gezeigten Ende eine S-Nocken-Ausbildung aufweist, welche in bekannter Weise die Bremsbacken einer Trommelbremse betätigt. Die Bremswelle verläuft in Richtung der Achse 17 und ist mit dem Schneckenrad 8 drehfest verbunden. Durch Betätigung des Hebels 16 in der durch Pfeile dargestellten Richtung Z erfolgt ein Auseinanderdrücken der Bremsbeläge und in der Richtung L erfolgt ein Lösen der Bremsbeläge in bekannter Weise. Die Richtung Z wird als Zuspannrichtung und die Richtung L als Löserichtung bezeichnet.

Der Klemmrollenfreilauf 3 führt die Funktion einer Richtungskupplung aus und ist ein industriell hergestelltes Präzisionsbauteil, welches besonders auf Langlebigkeit und Funktionssicherheit ausgelegt und dimensioniert ist.

Die Kugelrampenkupplung 18 wird aus den ersten Kugeltaschen 2.1 der Klemmhülse 2 und den zweiten Kugeltaschen 4.1 der Schnecke 4 gebildet, zwischen denen die Kugeln 5 in einer geeigneten Anzahl angeordnet sind. Die Kugelrampenkupplung 18 dient als Überlast- bzw. Lastschaltkupplung und ist mit der Vorspannfeder 7 vorgespannt. Die Vorspannfeder 7 ist zwischen der an der Schnecke 4 liegenden ersten Stützscheibe 12 und der an dem zweiten Ende der Welle 1 angeordneten zweiten Stützscheibe 13 vorgesehen. Eine axiale Festlegung der Vorspannfeder 7 auf der Welle 1 erfolgt durch den Sicherungsring 14 an diesem zweiten Wellenende, das dem ersten Wellenende mit der Klemmhülse 2 gegenüber liegt. Die Vorspannfeder 7 übt somit über die erste Stützscheibe 12 und die Schnecke 4 eine axiale Druckkraft aus, welche über die zweiten Kugeltaschen 4.1 und die Kugeln 5 auf die Klemmhülse 2 übertragen wird.

Auf diese Weise wird das Ansprechmoment dieser Bauart der Kugelrampenkupplung im Gegensatz zu Reibungskupplungen nur durch die Federvorspannkraft und die Formgebung der Kugeltaschen 2.1 und 4.1 definiert. Die Kugeltaschen 2.1 und 4.1 sind beispielsweise in Rampenform ausgebildet. Da es sich in dieser Ausführung um eine rein rollende Bewegung mit so genannter Punktberührung handelt, ist ein nahezu verschleißfreier und damit langlebiger Betrieb gewährleistet, denn beide Funktionselemente haben sich bereits im Laufe der Zeit millionenfach und in ausgezeichneter Weise in pneumatisch betätigten Scheibenbremsen der Baureihen SB und SN des Anmelder bewährt.

Es folgt nun eine Funktionsbeschreibung dieser ersten Ausführungsform mit Bezug auf die Figuren 1 bis 5.

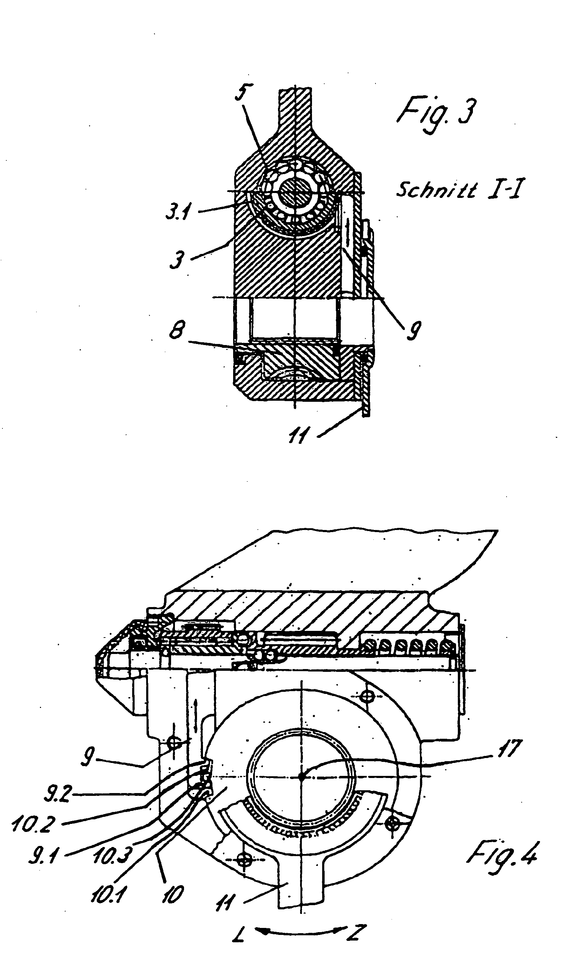

Die Nachstellung findet am Anfang eines Bremsvorgangs statt. Wird in den zugehörigen Bremszylinder ein Druck über ein Medium, hierbei ist es Luft, eingebracht, so fährt die Kolbenstange des Bremszylinders aus und betätigt über den Hebel 16 das Gehäuse 15, wobei eine Schwenkbewegung um die Achse 17 in Zuspannrichtung Z erfolgt. Die dazu erforderliche Kraftübertragung verläuft vom Hebel 16 über den oberen Abschnitt des Gehäuses 15, die Welle 1 und die Schnecke 4 auf das Schneckenrad 8, welches in drehfester Verbindung mit der Bremswelle steht, wie oben erläutert ist und anhand der Fig. 2 und einer Schnittdarstellung längs der Linie I-I aus Fig. 2 in Fig. 3 ersichtlich ist.

Nun wird Bezug genommen auf Fig. 4, welche eine schematische Darstellung einer Steuerscheibe 10 mit einer Zahnstange 9 des Gestängestellers 20 zeigt.

Die Zahnstange 9 steht mit der Welle 1 des Gestängestellers 20 über die Außenverzahnung 3.1 des Klemmrollenfreilaufs 3 in Wirkverbindung, wobei die Zahnstange 9 in Pfeilrichtung verschiebbar angeordnet ist. An ihrem unteren Ende weist sie einen ersten Nocken 9.1 und einen zweiten Nocken 9.2 auf, die in einem Abstand angeordnet sind. Die Nocken 9.1 und 9.2 stehen jeweils in Eingriff mit einer ersten Kerbe 10.1 und einer zweiten Kerbe 10.2, welche durch einen Zahn 10.3 getrennt sind und an einem Abschnitt des Umfangs einer Steuerscheibe 10 angeordnet sind. Die Steuerscheibe 10 ist über einen Fixierhebel 11 so befestigt, dass sie relativ zu der Schwenkbewegung des Gehäuses 15 feststeht.

In der ersten Phase des Bewegungsablaufs wird ein so genannter Leerweg zwischen dem ersten Nocken 9.1 der Zahnstange 9 und der ersten Kerbe 10.1 in der feststehenden Steuerscheibe 10 zurückgelegt. Durch die Größe dieses Leerwegs, also die Dimensionierung des Nockens 9.1 und der Kerbe 10.1 wird das Lüftspiel zwischen Bremsbacken und Bremstrommel bestimmt.

In der nächsten Phase kommt der ersten Nocken 9.1 der Zahnstange 9 an der Schulter der ersten Kerbe 10.1 der Steuerscheibe 10 zur Anlage. Hierbei gibt es nun zwei mögliche Betriebszustände.

Fall 1: Wenn das Lüftspiel korrekt ist, kommen zeitgleich mit der Anlage des Nockens 9.1 der Zahnstange 9 die Bremsbacken zur Anlage an der Trommelinnenwand. Eine Verstellung ist nun wegen der hohen Kräfte nicht mehr möglich, jedoch wird wegen der Elastizitäten in den Bauteilen der Trommelbremse eine weitere Drehung am Gestängesteller 20 durchgeführt. Damit dieses ohne Schädigung der Nachstellmechanik im Gestängesteller 20 möglich ist, tritt die Funktion der Überlastkupplung in Form der Kugelrampenkupplung 18 in Kraft. Dabei rollen die Kugeln 5 an den Kugelrampen der Kugeltaschen 2.1, 4.1 hoch und drücken dabei die Kupplungshälften, nämlich die gegenüberstehenden Stirnflächen der Klemmhülse 2 und der Schnecke 4 gegen die Federvorspannkraft der Vorspannfeder 7 auseinander. Somit kann eine weitere Drehung über die Außenverzahnung 3.1 des Klemmrollenfreilaufs 3 keine Drehung der Schnecke 4 und des Schneckenrads 8 bewirken.

Fall 2: Wenn das Lüftspiel zwischen Bremsbacken und Bremstrommel zu groß ist, wird durch die Zahnstange 9 und die mit dem Klemmrollenfreilauf 3 verbundene Außenverzahnung 3.1 auf Grund der Sperrwirkung des Klemmrollenfreilaufs 3 eine Drehbewegung in die Kugelrampenkupplung 18 eingeleitet. Da das Ansprechmoment der Kugelrampenkupplung 18 größer ist als das Drehmoment der anzutreibenden Schnecke 4, wird diese zusammen mit dem Schneckenrad 8 verdreht. Somit wird das Spiel zwischen Bremsbacke und Bremstrommel reduziert. Wenn im weiteren Verlauf die Bremsbacken zur Anlage an der Bremstrommel kommen, ist der Funktionsablauf wie unter Fall 1 beschrieben.

Beim Lösen der Bremse kehrt zunächst die Kugelrampenkupplung 18 (Überlastkupplung) in die Ruhelage zurück. Der Gestängesteller 20 dreht sich durch die Rückstellfeder im lastfreien Zustand in die Ruhestellung zurück. Dabei bewegt sich der Nocken 9.1 der Zahnstange 9 auf die andere Seite der Anlageschulter der Kerbe 10.1 in der feststehenden Steuerscheibe 10. Falls beim Betätigen der Bremse eine Nachstellung gemäß Fall 2 erfolgte, wird der Freilauf 3 um den für die Nachstellaktion zusätzlich durchgeführten Verdrehwinkel der Schnecke 4 in Löserichtung L zurückgedreht.

Ein manuelles Zurückstellen des Gestängestellers 20 geschieht wie üblich durch Zurückdrehen der Nachstellerwelle 1 mit Hilfe eines geeigneten Werkzeugs, beispielsweise ein Schraubenschlüssel, der auf einen geeigneten Ansatz 19 am ersten Ende der Welle 1 aufgesetzt wird. Hierbei werden die beiden Kupplungshälften der Kugelrampenkupplung 18, nämlich Klemmhülse 2 und Schnecke 4, soweit auseinander gedrückt und verdreht, bis die Kugeln 5 in die nächsten Klemmtaschen bzw. Kugeltaschen 2.1, 4.1 springen. Somit kann die Schnecke 4 entgegen der Sperrwirkung des Klemmrollenfreilaufs 3 verdreht werden.

Auf diese Weise wird ein Gestängesteller 20 mit folgenden vorteilhaften Merkmalen geschaffen:
- Exaktes Funktionsverhalten auf Grund der Verwendung von präzisen und reibungsunabhängigen Bauteilen wie Klemmrollenfreilauf 3 und Kugelrampenkupplung 18.
- Geringe Funktionshysterese und hoher Wirkungsgrad, da alle bewegten Bauteile der Nachstellermechanik kugelgelagert ausgebildet sind.
- Lange Lebensdauer und hohe Dauerfunktionssicherheit, da alle bewegten Bauteile kugelgelagert sind und somit kein nennenswerter Verschleiß auftreten kann.

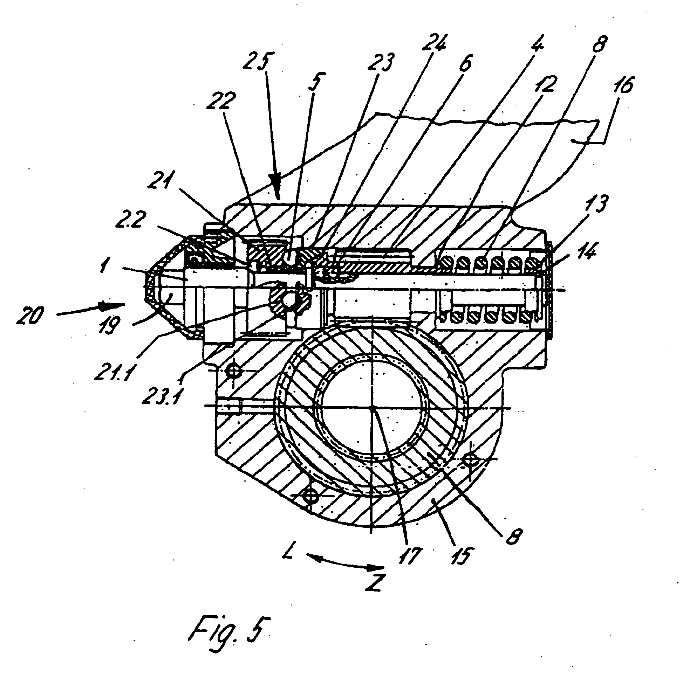

Fig. 5 zeigt eine zweite Ausführungsform des erfindungsgemäßen Gestängestellers 20 mit einer weiterentwickelten Nachstellertechnologie. Die besonderen Vorteile bestehen hierbei darin, dass eine weitere Verbesserung des Funktionsverhaltens, eine vereinfachte Herstellung und ein toleranzunempfindlicher konstruktiver Aufbau geschaffen wird.

Ein besonderer Vorteil ergibt sich bei dieser Ausgestaltung dadurch, dass die Freilauffunktion und die Überlastkupplungsfunktion in einer einzigen Baugruppe, einer so genannten Kugelsperrkupplung 25 zusammengefasst sind.

Der Nachstellmechanismus besteht aus folgenden Einzelteilen: einer Welle 1; einer außenverzahnten Antriebsscheibe 21 mit stirnseitiger Rampenkontur 21.1 und einem Axialkugellager 2.2; mehreren Kugeln 5; einer Drehfeder 22 zum Anlegen der Kugeln 5 an die Rampenkontur 21; einer Kegelscheibe 23 mit stirnseitiger Rampenkontur 23.1; einer Schnecke 4 mit Außenkegel 24; mehreren Sperrkugeln 6 zur Drehmomentübertragung; und einer Vorspannfeder 7 mit zugehörigen Stützringen 12, 13 und - Sicherungsring 14.

Diese Bauteile sind so ausgelegt, dass eine spanlose und somit kostengünstige Herstellung möglich ist. Da sämtliche unter Kraft bewegten Bauteile rollend, insbesondere auf Kugeln mit Punktberührung, gelagert sind, ist eine hohe Lebensdauer und ein exaktes, stabiles Funktionsverhalten gewährleistet.

Es folgt eine Funktionsbeschreibung unter Bezugnahme auf Fig. 1 bis 5. Die Funktionen der Zahnstange 9 mit Nocken 9.1 und Steuerscheibe 10 mit Kerbe 10.1 werden hier nicht weiter beschrieben, sondern es wird dazu auf die oben stehende Beschreibung verwiesen.

Im Fall 1 bei diesem zweiten Ausführungsbeispiel wird eine Schädigung der Nachstellmechanik im Gestängesteller 20 dadurch verhindert, dass die Überlastfunktion der Kugelsperrkupplung 25 in Funktion tritt. Ab einer von der Vorspannfeder 7 festgelegten Kraftschwelle rollen die Kugeln 5 der Sperrkupplung 25 in den Kugeltaschen mit den Rampenkonturen 21.2 und 23.1 schräg ausgebildete Rampen hoch. Der Steigungswinkel der Rampenlaufbahnen ist am Anfang deutlich größer, damit eine möglichst große Kraftschwelle erreicht wird. Nach Überwinden der Ansprechschwelle ist zur Schonung der Antriebselemente ein niedrigeres Kupplungsmoment vorteilhaft. Deshalb ist im weiteren Verlauf der Laufbahn der Steigungswinkel der Rampenkontur in diesem Beispiel geringer ausgestaltet als am Anfang.

Zum Fall 2 beim zweiten Ausführungsbeispiel: Wenn das Lüftspiel zwischen Bremsbacken und Bremstrommel zu groß ist, wird durch die Zahnstange 9 und die Kugelsperrkupplung 25 eine Drehbewegung in die Kegelkupplung, die aus der Kegelscheibe 23 und dem Außenkegel 24 der Schnecke 4 besteht, eingeleitet. Da das Ausrastmoment der vorgespannten Kugelsperrkupplung 25 größer ist als das Drehmoment der anzutreibenden Schnecke 4, wird diese zusammen mit dem Schneckenrad 8 verdreht. Somit wird das Spiel zwischen Bremsbacken und Bremstrommel reduziert. Wenn im weiteren Verlauf die Bremsbacken zur Anlage an der Bremstrommel kommen, ist der Funktionsablauf wie bereits im Fall 1 erläutert.

Beim Lösen der Bremse rollen zunächst die Kugeln 5 der Kugelsperrkupplung 25 in ihre Ruhelage zurück. Der Gestängesteller 20 dreht sich durch die Rückstellfeder im lastfreien Zustand in die Ruhestellung zurück. Dabei bewegt sich der Nocken 9.1 der Zahnstange 9 auf die andere Seite der Anlageschulter der Kerbe 10.1 in der feststehenden Steuerscheibe 10. Falls beim Betätigen der Bremse eine Nachstellung erfolgte, tritt die Freilauffunktion der Kugelsperrkupplung 25 in Aktion. Da die Kugeln 5 in der Ruhelage von der Vorspannfeder 7 entlastet sind und nur durch die Drehfeder 22 mit geringer Kraft an die Kugellaufbahnen 21.1, 23.1 angelegt werden, kann um den für den Nachstellvorgang zusätzlich durchgeführten Verdrehwinkel an der Schnecke 4 in der Löserichtung L zurückgedreht werden.

Das manuelle Zurückstellen des Gestängestellers 20 geschieht hierbei ebenfalls wie üblich durch Zurückdrehen der Nachstellerwelle 1 mit Hilfe eines Schraubenschlüssels. Hierbei werden die beiden Kupplungshälften 21.1 und 23.1 der Kugelsperrkupplung 25, nämlich Antriebsscheibe 21 und Kegelkupplung 23, 24, soweit auseinander gedrückt, bis die Kugeln 5 das Ende der Kugelrampenlaufbahnen erreichen. Auf Grund der Steigungswinkeländerung der Kugellaufbahnen, der erheblich ist, tritt in diesem Fall keine Selbsthemmung in der Kugelsperrkupplung 25 auf. Die Relativbewegung findet hierbei innerhalb der Kegelkupplung 23, 24 statt, die Schnecke 4 kann damit entgegen der feststehenden Kugelsperrkupplung 25 verdreht werden.

Die zweite Ausführungsform des Gestängestellers 20 weist folgende vorteilhafte Merkmalen auf:
- Exaktes Funktionsverhalten, da die Freilauffunktion und die Überlastfunktion nur durch die Formgebung und die Vorspannkraft definiert sind, und somit Reibungen keinen Einfluss auf das Funktionsverhalten haben.
- Geringe Funktionshysterese und hoher Wirkungsgrad, da alle bewegten Bauteile der Nachstellermechanik kugelgelagert ausgebildet sind.
- Lange Lebensdauer und hohe Dauerfunktionssicherheit, da auf Grund der kugeligelagerten Bauteile kein nennenswerter Verschleiß auftreten kann.
- Günstige Herstellung, da die wesentlichen Bauteile der Nachstellermechanik durch spanlose Umformprozesse herstellbar sind.

Die oben beschriebenen Ausführungsformen sind nur beispielhaft und schränken die Erfindung nicht ein. Variationen und Modifikationen sind dem Fachmann offensichtlich und möglich.

So ist es zum Beispiel möglich, dass die Zahnstange 9 auch einen zweiten Nocken 9.2 und die Steuerscheibe 10 eine zweite Kerbe 10.2 aufweisen kann. Weitere Nocken und Kerben sind ebenfalls möglich.

Es ist denkbar, dass die Rampenkonturen 21.1, 23.1 bzw. Kugeltaschen 2.1, 4.1 mehr als zwei verschiedene Steigungswinkel aufweisen können. Selbstverständlich sind auch kurvenförmige Laufbahnen möglich.

### Bezugszeichenliste

- 1: Welle
- 2: Klemmhülse
- 2.1: Erste Kugeltasche
- 2.2: Axialkugellager
- 3: Klemmrollenfreilauf
- 3.1: Außenverzahnung
- 4: Schnecke
- 4.1: Zweite Kugeltasche
- 5: Kugel
- 6: Sperrkugel
- 7: Vorspannfeder
- 8: Schneckenrad
- 9: Zahnstange
- 9.1: Erster Nocken
- 9.2: Zweiter Nocken
- 10: Steuerscheibe
- 10.1: Erste Kerbe
- 10.2: Zweite Kerbe
- 10.3: Zahn
- 11: Fixierhebel
- 12: Erste Stützscheibe
- 13: Zweite Stützscheibe
- 14: Sicherungsring
- 15: Gehäuse
- 16: Hebel
- 17: Achse
- 18: Kugelrampenkupplung
- 19: Ansatz
- 20: Gestängesteller
- 21: Antriebsscheibe
- 21.1: Erste Rampenkontur
- 22: Drehfeder
- 23: Kegelscheibe
- 23.1: Zweite Rampenkontur
- 24: Außenkegel
- 25: Kugelsperrkupplung

- L: Löserichtung
- Z: Zuspannrichtung

## Patentansprüche

1. Gestängesteller (20) für eine Trommelbremse zum Nachstellen des bremsbedingten Verschleißes insbesondere an den Bremsbelägen, mit einer Überlastkupplung und einer Einwegdreh- bzw. Richtungskupplung, **dadurch gekennzeichnet, dass** die Überlastkupplung als Kugelrampenkupplung (18) ausgebildet ist, die durch eine Druckfeder (7) vorgespannt ist.

2. Gestängesteller (20) nach Anspruch 1, **dadurch gekennzeichnet, dass** die Richtungskupplung als Klemmrollenfreilauf (3) ausgebildet ist.

3. Gestängesteller (20) nach Anspruch 1 oder 2, **dadurch gekennzeichnet, dass** die Kugelrampenkupplung (18) aus gegenüber liegend angeordneten Stirnflächen besteht, die jeweils mit Kugeltaschen (2.1, 4.1) für dazwischen angeordnete Kugeln (5) ausgebildet sind.

4. Gestängesteller (20) nach einem der Ansprüche 1 bis 2, **dadurch gekennzeichnet, dass** die Überlastkupplung und die Richtungskupplung zusammen eine Kugelsperrkupplung (25) bilden.

5. Gestängesteller (20) nach Anspruch 4, **dadurch gekennzeichnet, dass** die Kugelsperrkupplung (25) aus zwei gegenüberliegend angeordneten Rampenkonturen (21.1, 24.1) mit dazwischen angeordneten Kugeln (5) besteht.

6. Gestängesteller (20) nach Anspruch 5, **dadurch gekennzeichnet, dass** die Rampenkonturen (21.1, 24.1) mindestens zwei unterschiedliche Steigungen aufweisen.

7. Gestängesteller (20) nach Anspruch 5, **dadurch gekennzeichnet, dass** die Rampenkonturen (21.1, 24.1) eine kurvenförmige Ausbildung aufweisen.

8. Gestängesteller (20) nach einem der Ansprüche 4 bis 7, **dadurch gekennzeichnet, dass** die Kugelsperrkupplung (25) eine Kegelkupplung (23, 24) aufweist.

9. Gestängesteller (20) nach einem der Ansprüche 4 bis 8, **dadurch gekennzeichnet, dass** die Rampenkonturen (21.1, 24.1) und die dazwischen angeordneten Kugeln (5) durch eine Drehfeder (22) aneinander gehalten werden.

10. Trommelbremse mit einem Gestängesteller (20) nach einem der Ansprüche 1 bis 9.

## Claims

1. A linkage adjuster (20) for a drum brake for adjusting the braking-induced wear in particular at the friction linings, having an overload clutch and having a one-way rotational clutch or directional clutch, **characterized in that** the overload clutch is embodied as a ball ramp clutch (18) which is preloaded by a pressure spring (7).

2. The linkage adjuster (20) as claimed in claim 1, **characterized in that** the directional clutch is embodied as a clamping body freewheel (3).

3. The linkage adjuster (20) as claimed in claim 1 or 2, **characterized in that** the ball ramp clutch (18) is composed of oppositely arranged end faces which are in each case formed with ball pockets (2.1, 4.1) for balls (5) which are arranged in between.

4. The linkage adjuster (20) as claimed in one of claims 1 to 2, **characterized in that** the overload clutch and the directional clutch together form a ball lock clutch (25).

5. The linkage adjuster (20) as claimed in claim 4, **characterized in that** the ball lock clutch (25) is composed of two oppositely arranged ramp contours (21.1, 24.1) with balls (5) which are arranged in between.

6. The linkage adjuster (20) as claimed in claim 5, **characterized in that** the ramp contours (21.1, 24.1) have at least two different gradients.

7. The linkage adjuster (20) as claimed in claim 5, **characterized in that** the ramp contours (21.1, 24.1) have a curved design.

8. The linkage adjuster (20) as claimed in one of claims 4 to 7, **characterized in that** the ball lock clutch (25) has a cone clutch (23, 24).

9. The linkage adjuster (20) as claimed in one of claims 4 to 8, **characterized in that** the ramp contours (21.1, 24.1) and the balls (5) which are arranged in between are held against one another by means of a torsion spring (22).

10. A drum brake having a linkage adjuster (20) as claimed in one of claims 1 to 9.

## Revendications

1. Régleur ( 20 ) de timonerie destiné à un frein à tambour, conçu pour le rattrapage de l'usure due au freinage, notamment de l'usure des garnitures de frein, comportant un accouplement de surcharge et un accouplement rotatif unidirectionnel ou un accouplement directionnel, **caractérisé en ce que** l'accouplement de surcharge est réalisé sous forme d'accouplement ( 18 ) à rampe à billes, qui est précontraint par un ressort ( 7 ) de pression.

2. Régleur ( 20 ) de timonerie suivant la revendication 1, **caractérisé en ce que** l'accouplement directionnel est réalisé sous forme de roue libre ( 3 ) à rouleaux.

3. Régleur ( 20 ) de timonerie suivant la revendication 1 ou 2, **caractérisé en ce que** l'accouplement ( 18 ) à rampe à billes est constitué de faces frontales disposées en vis-à-vis, qui sont respectivement pourvues de poches à billes ( 2.1, 4.1 ) pour des billes ( 5 ) disposées entre elles.

4. Régleur ( 20 ) de timonerie suivant l'une des revendications 1 à 2, **caractérisé en ce que** l'accouplement de surcharge et l'accouplement directionnel forment conjointement un accouplement ( 25 ) de verrouillage à billes.

5. Régleur ( 20 ) de timonerie suivant la revendication 4, **caractérisé en ce que** l'accouplement ( 25 ) de verrouillage à billes est constitué de deux contours ( 21.1, 24.1 ) de rampe disposés en vis-à-vis, avec des billes ( 5 ) disposées entre eux.

6. Régleur ( 20 ) de timonerie suivant la revendication 5, **caractérisé en ce que** les contours ( 21.1, 24.1 ) de rampe possèdent au moins deux pentes différentes.

7. Régleur ( 20 ) de timonerie suivant la revendication 5, **caractérisé en ce que** les contours ( 21.1, 24.1 ) de rampe possèdent une forme incurvée.

8. Régleur ( 20 ) de timonerie suivant l'une des revendications 4 à 7, **caractérisé en ce que** l'accouplement ( 25 ) de verrouillage à billes comprend un accouplement ( 23, 24 ) conique.

9. Régleur ( 20 ) de timonerie suivant l'une des revendications 4 à 8, **caractérisé en ce que** les contours ( 21.1, 24.1 ) de rampe et les billes ( 5 ) disposées entre eux sont maintenus les uns contre les autres par un ressort ( 22 ) de torsion.

10. Frein à tambour équipé d'un régleur ( 20 ) de timonerie suivant l'une des revendications 1 à 9.
